(19) Europäisches Patentamt
European Patent Office
Office européen des brevets

(11) **EP 2 335 063 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **09782717.4**

(22) Anmeldetag: **07.09.2009**

(51) Int Cl.:
*G01N 29/07* (2006.01)    *G01N 29/24* (2006.01)
*G01N 29/32* (2006.01)

(86) Internationale Anmeldenummer:
**PCT/EP2009/061579**

(87) Internationale Veröffentlichungsnummer:
**WO 2010/026252 (11.03.2010 Gazette 2010/10)**

(54) **IMPULSECHOVERFAHREN MIT ERMITTLUNG DER VORLAUFKÖRPERGEOMETRIE**

PULSE-ECHO METHOD WITH DETERMINATION OF THE DELAY-LINE GEOMETRY

MÉTHODE PAR IMPULSION-ÉCHO AVEC DÉTERMINATION DE LA GÉOMÉTRIE DE LA LIGNE À RETARD

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.09.2008 DE 102008041831**

(43) Veröffentlichungstag der Anmeldung:
**22.06.2011 Patentblatt 2011/25**

(73) Patentinhaber: **GE Sensing & Inspection Technologies GmbH**
**50354 Hürth (DE)**

(72) Erfinder:
• **OBERDOERFER, York**
**40764 Langenfeld (DE)**
• **BERKE, Michael**
**50999 Köln (DE)**
• **KLEINERT, Wolf-Dietrich**
**53125 Bonn (DE)**
• **POIRIER, Jerome**
**F-91470 Forges Les Bains (FR)**
• **SCHIEKE, Sascha**
**Greer, SC 29650 (US)**

(74) Vertreter: **Illingworth-Law, William Illingworth**
**GPO Europe**
**GE International Inc.**
**The Ark**
**201 Talgarth Road**
**Hammersmith**
**London W6 8BJ (GB)**

(56) Entgegenhaltungen:
DE-A1- 3 327 526        DE-A1- 3 441 894
DE-A1-102004 027 798

• **SONG S-J ET AL: "Simulation of 3-D radiation beam patterns propagated through a planar interface from ultrasonic phased array transducers" ULTRASONICS, IPC SCIENCE AND TECHNOLOGY PRESS LTD. GUILDFORD, GB, Bd. 40, Nr. 1-8, 1. Mai 2002 (2002-05-01), Seiten 519-524, XP004357251 ISSN: 0041-624X**

**Beschreibung**

Die Erfindung betrifft ein Impulsechoverfahren zur Ultraschall-Werkstoffprüfung. Dabei handelt es sich um ein akustisches Verfahren zum Auffinden von Materialfehlern, bei welchem Ultraschall verwendet wird. Die Ultraschallprüfung gehört zu den zerstörungsfreien Prüfmethoden. Dadurch lassen sich Bauteile auch im eingebauten Zustand prüfen, z. B. die Tragelemente eines Flugzeuges. Die Ultraschallprüfung ist ein geeignetes Prüfverfahren bei schallleitfähigen Werkstoffen (dazu gehören die meisten Metalle) zur Auffindung von inneren und äußeren Fehlern, z. B. bei Schweißnähten, Schmiedestücken, Guss, Halbzeugen oder Rohren. Im Maschinenbau ist die Kontrolle der Qualität von Bauteilen eine wichtige Aufgabe, um zum Beispiel die Sicherheit von Personenbeförderungseinrichtungen oder von Rohrleitungen, beispielsweise für Gefahrstoffe, zu gewährleisten. Verlegte Eisenbahnschienen werden routinemäßig von Prüfzügen geprüft. Daher wird die Steigerung der Zuverlässigkeit und Genauigkeit dieser Verfahren angestrebt.

Wie alle Prüfverfahren ist auch die Ultraschallkontrolle genormt und wird nach Richtlinien durchgeführt, beispielsweise gemäß der DIN EN 10228-3 1998-07 Zerstörungsfreie Prüfung von Schmiedestücken aus Stahl - Teil 3: Ultraschallprüfung von Schmiedestücken aus ferritischem und martensitischem Stahl, die hiermit durch Bezugnahme umfasst ist. Für die zerstörungsfreie Prüfung eines Werkstücks durch Ultraschall sind geeignete Prüfgeräte und Verfahren bekannt. Ganz allgemein verwiesen wird auf das Fachbuch von J. und. H. Krautkrämer, Werkstoffprüfung mit Ultraschall, ISBN-13: 978-3-540-15754-0, 5. Auflage (1986), Springer (Berlin).

Allgemein basieren diese Verfahren auf der Reflexion von Schall an Grenzflächen. Als Schallquelle verwendet man meist einen Ultraschallkopf oder Prüfkopf, dessen Strahlung im Frequenzbereich von 10 kHz bis 100 MHz liegt. Beim Impulsechoverfahren gibt der Ultraschallschallkopf keine kontinuierliche Strahlung ab, sondern sehr kurze Schallimpulse, deren Dauer 1 $\mu$s und weniger ist. Der vom Sender ausgehende Impuls durchläuft mit der betreffenden Schallgeschwindigkeit das zu untersuchende Werkstück und wird an der Grenzfläche Festkörper-Luft fast vollständig reflektiert. Der Schallkopf kann meist nicht nur Impulse aussenden, sondern auch ankommende Impulse in elektrische Messsignale umwandeln, er arbeitet also auch als Empfänger. Die Zeit, die der Schallimpuls benötigt, um vom Sender durch das Werkstück und wieder zurück zu kommen, wird mit einem Oszilloskop oder einer Rechnereinheit als Auswerteinheit gemessen. Bei bekannter Schallgeschwindigkeit c im Material lässt sich auf diese Weise z.B. die Dicke eines Werkstücks kontrollieren. Kernstück eines solchen Prüfkopfes ist wenigstens ein Ultraschallwandler z. B. in Form eines piezoelektrischen Elements. Es ist ferner bekannt, beispielsweise aus der WO 2007/144271, einen Gruppenstrahler aus mehreren, separat ansteuerbaren, sich in einem festen Anordnungsverhältnis befindlichen Ultraschallwandlern zur Erzeugung und zum Empfang der Ultraschallimpulse zu verwenden.

Der oder die Wandler werden meist unter Zwischenlage einer Anpassungsschicht - auch Vorlaufkörper genannt - beispielsweise in Keilform, meist aus einem thermoplastischen Kunststoff wie Polymethylmethacrylat (PMMA), an das zu untersuchende Werkstück gekoppelt. Am Vorlaufkörper ist eine Koppelfläche vorhanden, über die der von dem oder den Ultraschallwandlern erzeugte Schall in das zu prüfende Werkstück einkoppelbar ist, wobei die Keilform einen schrägen Schalleintritt in das Werkstück bewirkt. Der Vorlaufkörper und das oder die piezoelektrischen Elemente sind i. A. in einem Gehäuse angeordnet, das auf seiner einen Seite verschlossen ist und auf seiner anderen Seite eine Koppelöffnung aufweist, durch die der von der Schallankoppelfläche abgestrahlte Ultraschall austreten kann.

Zur Kopplung zwischen Werkstück und Prüfkopf, d.h. dem Vorlaufkörper, wird auf die Oberfläche des zu untersuchenden Werkstücks ein Koppelmittel (z. B. Kleister (Lösung), Gel, Wasser oder Öl) aufgetragen. Meist wird mit dem Prüfkopf die zu prüfende Oberfläche abgefahren. Dieses kann manuell, mechanisiert oder automatisch (z. B. innerhalb von Fertigungsstraßen) erfolgen. Bei letzteren wird zwecks Übertragung des Schallsignals das Prüfstück oft in eine geeignete Flüssigkeit getaucht (Tauchtechnik), oder definiert benetzt.

Die Kenntnis der für die Ultraschalluntersuchung relevanten Bemaßungen des Vorlaufkörpers ist z.B. wesentlich für die genaue Ortung von Fehlern eines Werkstücks und/oder der Bestimmung der Abmessungen des Werkstücks. Darüber hinaus hat die Geometrie des Vorlaufkörpers starken Einfluss auf Ultraschalluntersuchungen mit der sog. AVG-Methode, insbesondere wenn diese mit einem Prüfkopf ausgeführt wird, welcher eine elektronische Einstellung des Einschallwinkels erlaubt. Bei einem keilförmigen Vorlaufkörper sind die für die Ultraschalluntersuchung relevanten Bemaßungen beispielsweise der Keilwinkel alpha sowie der Abstand d zwischen der Koppelfläche, (d.h. der an das zu untersuchende Werkstück angrenzenden Begrenzungsfläche), des Vorlaufkörpers und dem Mittelpunkt der von den Wandlern bedeckten Fläche auf der gegenüberliegenden Begrenzungsfläche des Vorlaufkörpers.

Es ist bekannt, die Verbindung zwischen den Ultraschallwandlern und dem Vorlaufkörper lösbar auszugestalten, um bei der Ultraschalluntersuchung des Werkstücks in Abhängigkeit der zu untersuchenden Werkstückgeometrie und/oder der erwünschten Untersuchungsrichtung im Werkstück usw. die Untersuchungsbedingungen wie z. B. den Einschallwinkel variieren zu können. Es ist ferner bekannt, die spezifischen Daten des Vorlaufkeils in einem mit dem Vorlaufkeil verbundenen nicht flüchtigen Speicher zu hinterlegen und diese bei der Ultraschalluntersuchung auszulesen und an die Auswerteinheit zu übertragen. Dies ist beispielsweise aus der DE 3327526 A1 bekannt, erweist sich in der Praxis jedoch als sehr aufwendig, da eine Datenkommunikation zwischen dem Vorlaufkörper und der Auswerteinheit erforderlich ist. Auch kann eine fehlerhafte Montage des Vorlaufkörpers an dem Ultraschallwandler (z. B. verdrehte Montagerichtung) auf diese Weise nicht erkannt werden.

Zudem hat es sich gezeigt, dass sich die Bemaßung des Vorlaufkörpers verschleißbedingt ändert, was u. a. auf die häufig verwendeten thermoplastischen und daher meist sehr weichen Kunststoffe und das üblicherweise meist händische Verschieben des Vorlaufkörpers über eine Oberfläche des zu untersuchenden Werkstücks zurückzuführen ist. Folglich ist eine Überprüfung der für die Ultraschalluntersuchung relevanten Bemaßungen des Vorlaufkörpers erforderlich. Aus der DE 3327526 A1 ist grundsätzlich bekannt, die Bemaßung des Vorlaufkörpers zu überprüfen. Dies erfolgt aber durch ein Rückwandecho eines speziellen Kalibrierkörpers, der an die Koppelfläche des Vorlaufkörpers angrenzend anzuordnen ist. Dies ist vergleichsweise aufwendig und die Messung wird durch Variation des Kalibrierkörpers und die Ankopplung zwischen Kalibrierkörper und Vorlaufkörper in ihrer Genauigkeit nachteilig beeinflusst.

Aus der DE 3441894 A1 ist ferner bekannt, die Dickenabmessung in einem Werkstück mittels des Rückwandechos des Werkstücks zu ermitteln.

Vor diesem Hintergrund haben sich die Erfinder der vorliegenden Erfindung die Aufgabe gestellt, ein verbessertes, da genaueres, Impulsechoverfahren bereitzustellen, bei dem die für die Ultraschalluntersuchung relevanten Bemaßung(-en) des Vorlaufkörpers vergleichsweise einfach gemessen und gegebenenfalls bei der Auswertung der Ultraschalluntersuchung berücksichtigt werden.

Diese Aufgabe wird durch ein Verfahren gemäß Anspruch 1 gelöst. Vorteilhafte Ausgestaltungen sind jeweils Gegenstand der abhängigen Ansprüche.

Bei dem Verfahren zur zerstörungsfreien Ultraschalluntersuchung wird wenigstens ein Ultraschallimpuls mittels wenigstens eines Ultraschallsenders in ein zu untersuchendes Werkstück abgestrahlt. Die Erfindung ist nicht hinsichtlich des Werkstücks eingeschränkt, im Allgemeinen wird es jedoch aus einem akustisch leitenden Material bestehen. Der Ultraschallimpuls wird an Grenzflächen, beispielsweise an dessen Rückwand, und Ungänzen im Werkstück reflektiert. Der reflektierte Ultraschall wird mittels wenigstens eines Ultraschallempfängers empfangen und die zugehörigen Signale werden ausgewertet. Die aufgezeichneten Signale werden beispielsweise in zeit- oder ortsabhängiger Darstellung zur Anzeige gebracht, beispielsweise mittels Oszilloskop oder einem Computerprogrammprodukt, das auf einem Computer mit Anzeigevorrichtung ausgeführt wird. Die ortsabhängige Darstellung ist beispielsweise über die Schallgeschwindigkeit mit der zeitabhängigen Darstellung verknüpft. Der Ultraschall durchdringt bei seiner Ausbreitung vom Sender zum Werkstück und auf dem Weg zurück vom Werkstück zum Empfänger einen Vorlaufkörper, der zwischen dem Werkstück und dem Sender beziehungsweise Empfänger angeordnet ist.

Das Verfahren zeichnet sich dadurch aus, dass wenigstens ein, der vorher erwähnten Untersuchung des Werkstücks vor-, zwischen- oder nachgeschalteter Schritt vorgesehen ist, der der Ermittlung einer für die Ultraschalluntersuchung relevanten Bemaßung, beispielsweise der Dicke des Vorlaufkörpers und/oder des Winkels seiner Begrenzungsflächen dient. Bei diesem Schritt wird die Laufzeit wenigstens eines Ultraschallimpulses, der von dem Ultraschallsender erzeugt wird, an einer Begrenzungsfläche des Vorlaufkörpers reflektiert und von dem Ultraschallempfänger empfangen. Anders ausgedrückt wird die Laufzeit des Rückwandechos des Vorlaufkeils ermittelt, beispielsweise anhand der Schallgeschwindigkeit und/oder anhand des Abstandes zwischen Sender und Empfänger. Aus der gemessenen Laufzeit wird wenigstens eine für die Ultraschalluntersuchung relevante Bemaßung des Vorlaufkörpers ermittelt. Die Begriff Empfänger und Sender sind funktionell auszulegen. Daher ist in einer erfindungsgemäßen Ausgestaltung vorgesehen, dass ein Wandler, der als Sender fungiert, auch als Empfänger des von ihm vorher ausgesandten Ultraschallimpulses dient. Anderseits kann auch ein anderer von dem Sender beabstandeter Wandler als Empfänger dienen. Die Bestimmung der aktuellen Bemaßung des Vorlaufkörpers kann in einer einfachen Ausgestaltung des erfindungsgemäßen Verfahrens zur Überprüfung von dessen Maßhaltigkeit verwendet werden.

Zudem können so ohne konstruktiv aufwendigen Datenaustausch zwischen Auswerteinheit und Vorlaufkörper oder zeitaufwendige manuelle Dateneingabe die für die Ultraschalluntersuchung relevanten geometrischen Daten des Vorlaufkörpers bei der Auswertung der Ultraschalluntersuchung bereitgestellt werden. Zudem kann durch die nahezu zeitgleiche Messung eine verschleißbedingte Abweichung festgestellt werden. Durch Laufzeitmessung des Rückwandechos des Vorlaufkeils wird kein Kalibrierkörper benötigt. Dies vereinfacht die Überprüfung und deren Genauigkeit und ermöglicht gegebenenfalls eine in situ Überprüfung. Es dürfte dem Fachmann klar sein, dass er durch Wiederholung des Schrittes zur Bemaßungsermittlung, Umkehrung der Schallausbreitung dabei und/oder durch Verwendung weiterer Wandler, d.h. Schallstrecken, die Genauigkeit der Ermittlung steigern kann.

Gemäß einer weiteren bevorzugten Ausgestaltung ist während des Schrittes zur Ermittlung wenigstens einer Bemaßung des Vorlaufkörpers dieser ungekoppelt. "ungekoppelt" im Sinne der Erfindung ist so zu verstehen, dass der Vorlaufkörper nicht akustisch an das zu untersuchende Werkstück gekoppelt ist. Beispielsweise ist er an Luft gekoppelt. Dadurch kommt es zu keiner Beeinflussung der Ultraschallausbreitung im Vorlaufkörper durch ein angekoppeltes Werkstück. Insbesondere bei der Verwendung eines Rückwandechos wird durch eine Ankopplung an Luft aufgrund der großen Änderung der akustischen Impedanz beim Übergang vom Vorlaufkörper zur umgebenden Luft der Reflexionsgrad und damit die Genauigkeit der Ermittlung erhöht. Aus diesem Grund ist prinzipiell unter ungekoppeltem Zustand die Angrenzung der Koppelfläche an jegliches Medium zu verstehen, bei dem letzteres eine gegenüber dem Material des Vorlaufkörpers erheblich andere akustische Impedanz aufweist, so dass bevorzugt innere akustische Totalreflexion des Testschalls im Vorlaufkörper auftritt.

Bevorzugt wird die Bemaßung mittels einer der jeweiligen Laufzeit entsprechenden, kürzesten, geometrisch oder durch numerische Simulation gewonnenen Schallstrecke berechnet.

Ferner werden gemäß einer bevorzugten Ausführungsform in dem Schritt zur Ermittlung wenigstens einer für die Ultraschalluntersuchung relevanten Bemaßung des Vorlaufkörpers die Laufzeit eines schräg auf die an das Werkstück angrenzende oder anzugrenzende Koppelfläche auftreffenden Rückwandechos und die Laufzeit wenigstens eines senkrecht auf die Koppelfläche auftreffenden Rückwandechos gemessen. Es lässt sich zeigen, dass mittels weniger Laufzeitmessungen bei einfachen geometrischen Ausgestaltungen des Vorlaufkörpers, insbesondere bei Keilform oder bei zwei parallelen, die Schallausbreitung kreuzenden Begrenzungsflächen, die Berechnung beispielsweise unter Kenntnis nur des Abstandes von Ultraschallsender und Ultraschallempfänger durchgeführt werden kann. Bevorzugt findet das Verfahren daher Anwendung bei einem Vorlaufkörper, der keilförmig ist oder zwei planparallele Flächen aufweist. Dadurch kann die kürzeste Schallstrecke des Ultraschalls bei der Bestimmung der Bemaßung aus der Laufzeit durch einfache geometrische Berechnungen ermittelt werden.

In einer bevorzugten Ausführungsform wird ein Gruppenstrahler aus selektiv ansteuerbaren, jeweils als Ultraschallempfänger oder -sender fungierenden, Ultraschallwandlern zur Durchführung des Verfahrens verwendet. Durch die Verwendung eines Gruppenstrahlers wird die Möglichkeit eröffnet, durch die Wahl des Ortes und/oder durch die Anzahl der selektiv angesteuerten Wandler die Schallabstrahlung leicht so an die Geometrie und/oder Dämpfung des Vorlaufkörpers anzupassen, dass der ausgestrahlte Ultraschallimpuls tatsächlich einen Empfänger erreicht. Bevorzugt umfasst der Gruppenstrahler mehr als zwei selektiv ansteuerbare Wandler.

Im Schritt zur Bestimmung wenigstens einer für die Ultraschalluntersuchung relevanten Bemaßung des Vorlaufkörpers werden zur Steigerung der Messgenauigkeit bevorzugt die äußersten Ultraschallwandler des Gruppenstrahlers verwendet.

Bevorzugt wird die ermittelte Bemaßung des Vorlaufkörpers bei der Auswertung der Signale aus der Ultraschalluntersuchung des Werkstücks berücksichtigt, um so beispielsweise die Position einer Ungänze bezüglich der Lage der oder des sendenden und/oder empfangenden Wandlers mit höherer Genauigkeit ermitteln zu können.

Das Verfahren eignet sich besonders bei einem Vorlaufkörper aus einem thermoplastischen Kunststoffmaterial, insbesondere aus einem vernetzten Polystyrol-Copolymer, beispielsweise Rexolite®, da diese einem erhöhten Verschleiß und damit einer laufenden und starken Veränderung ihrer Bemaßung unterliegen.

Bei der Auswertung im Schritt zur Bestimmung der relevanten Bemaßung des Vorlaufkörpers kann das Signal des empfangenden Wandlers des Gruppenstrahlers auf die aufsteigende Flanke oder einen Nulldurchgang des Impulsechos getriggert sein, um die Laufzeit zu bestimmen. Es hat sich aber überraschend gezeigt, dass bei einer Triggerung auf die Impulsspitze des empfangenen Impulsechos die Genauigkeit gesteigert werden kann, weshalb diese Vorgehensweise bevorzugt verwendet wird. Dabei kann die Auswertung z.B. in einer getrennt vom Prüfkopf ausgebildeten (nicht dargestellten) Ansteuereinheit erfolgen. Mit dieser kann auch die zur Ansteuerung des Gruppenstrahlers zur Aussendung von Ultraschallpulsen erforderliche digitale und ggf. analoge Ansteuerelektronik zu einer gemeinsamen Ansteuer- und Auswerteeinheit zusammengefasst sein.

In einer weiteren bevorzugten Ausgestaltung des erfindungsgemäßen Verfahrens wird die im Rahmen des erfindungsgemäßen Verfahrens ermittelte Bemaßung des Vorlaufkörpers bei der Auswertung der Prüfergebnisse berücksichtigt. Dies kann insbesondere bei Verwendung eines Gruppenstrahlers für die Erzeugung der Ultraschallpulse für die Werkstoffprüfung relevant sein, vor allem, wenn dieser im Rahmen der Ultraschallprüfung so angesteuert wird, dass der Einschallwinkel in das Werkstück kontrolliert elektronisch eingestellt wird. Beispielhaft wird in diesem Zusammenhang auf die Patentanmeldungen DE 10 2008 037 173, DE 10 2008 002 445 sowie DE 10 2008 002 450 derselben Anmelderin verwiesen, die im Zusammenhang stehen mit der Verallgemeinerung der sog. AVG-Methode auf Prüfeinrichtungen mit elektronisch einstellbarem Einschallwinkel. Relevant kann eine Änderung der Bemaßung eines keilförmigen Vorlaufkörpers aber auch in Bezug auf einen veränderten Keilwinkel alpha sein, aus dem ebenfalls unmittelbar eine Änderung der Einschallwinkels in den zu prüfenden Werkstoff resultiert. Ändern sich Dickenabmessungen der Vorlaufkörpers, so kann dies zu einem veränderten Eintrittszeitpunkt in den Prüfling führen, was bei Laufzeitmessungen und damit korrelierten Lagebestimmungen relevant ist. Bei einem keilförmigen Vorlaufkörper führt dies weiterhin zu einer Änderung des Einkoppelorts. Alle vorgenanten Effekte werden in bevorzugten Weiterbildungen des erfindungsgemäßen Verfahrens ebenfalls automatisiert bei der Ansteuerung des Gruppenstrahlers kompensiert und/oder bei der Auswertung der Prüfergebnisse berücksichtigt. Diese speziellen Verfahrensführungen können insbesondere in der vorstehend genannten Ansteuer- und Auswerteeinheit implementiert sein.

Das Verfahren umfasst in einer Ausgestaltung ferner einen Schritt zur Bestimmung eines für die Ultraschalluntersuchung des Werkstücks festzulegenden Bezugspunkts des Vorlaufkörpers, beispielsweise einer Kante des Vorlaufkörpers, indem dieser beispielsweise bündig abschließend mit der Kante eines Testkörpers angeordnet wird und das Rückwandecho dieses Testkörpers untersucht wird. Eine Vorrichtung zur Durchführung des Verfahrens in wenigstens einer der zuvor beschriebenen vorteilhaften Ausgestaltungen umfasst wenigstens einen Ultraschallsender zur Abstrahlung wenigstens eines Ultraschallimpulses in ein zu untersuchendes Werkstück, wobei die Ultraschallimpulse an Grenzflächen im Werkstück reflektiert werden. Ferner sind wenigstens ein Ultraschallempfänger zum Empfang des reflektierten Ultraschalls, eine Auswerteinheit zur Auswertung der zugehörigen Signale und ein Vorlaufkörper vorgesehen, der so zwischen dem Werkstück und dem Sender angeordnet ist, dass der Ultraschall diesen durchdringt. Die Vorrichtung zeichnet sich dadurch aus, dass der Ultraschallempfänger und der Ultraschallsender zur Durchführung des Schrittes zur Ermittlung der Geometrie des Vorlaufkörpers fest oder lösbar an diesem angeordnet sind. Bei diesem Schritt wird die Laufzeit wenigstens eines Ultraschallimpulses, der von dem Ultraschallsender erzeugt, an einer Begrenzungsfläche des Vorlaufkörpers reflektiert und von dem oder einem weiteren Ultraschallempfänger empfangen wird, gemessen und daraus wenigstens eine für die Ultraschalluntersuchung relevante Bemaßung des Vorlaufkörpers ermittelt. Anders ausgedrückt, es wird die Laufzeit wenigstens eines Rückwandechos des Vorlaufkeils ermittelt. Die Begriffe Empfänger und Sender sind funktionell auszulegen. Daher ist in einer erfindungsgemäßen Ausgestaltung vorgesehen, dass ein Wandler, der als Sender fungiert, auch als Empfänger des von ihm vorher ausgesandten Ultraschallimpulses dient. Anderseits kann auch ein anderer Wandler, der von dem Sender beabstandet angeordnet ist, als Empfänger dienen. Durch die Bestimmung der aktuellen Bemaßung des Vorlaufkörpers kann dessen Verschleiß überwacht und/oder die Genauigkeit der mit der Vorrichtung durchgeführten Ultraschalluntersuchung erhöht werden. Zudem können so ohne konstruktiv aufwendigen Datenaustausch zwischen Auswerteinheit und Vorlaufkörper oder zeitaufwendige manuelle Dateneingabe die für die Ultraschalluntersuchung relevanten geometrischen Daten des Vorlaufkörpers der Ultraschalluntersuchung bereitgestellt werden. Zudem kann durch die nahezu zeitgleiche Messung eine verschleißbedingte Abweichung sicher festgestellt werden. Da eine Laufzeitmessung des Rückwandechos des Vorlaufkeils durchgeführt wird, wird kein separater Kalibrierkörper mehr benötigt. Dies vereinfacht die Überprüfung und deren Genauigkeit und ermöglicht gegebenenfalls eine in situ Überprüfung.

Im Folgenden wird die Erfindung anhand einer schematischen Darstellung, wie den zugehörigen geometrischen Berechnungen sowie einer bevorzugten Ausführungsform erläutert, ohne die Erfindung auf das Gezeigte und Beschriebene zu beschränken.

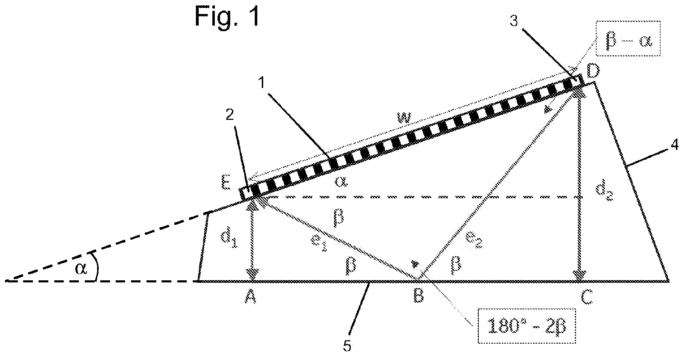

Bei der bevorzugten Ausführungsform des erfindungsgemäßen Verfahrens wird mittels des in Figur 1 gezeigten Prüfkopfs eine Ultraschalluntersuchung mittels Impulsecho-Verfahren an einem in Figur 1 nicht dargestellten Werkstück vorgenommen. Dazu wird in dieser Ausführungsform der Gruppenstrahler 1 des Prüfkopfs verwendet, der auch zur Bestimmung der Bemaßung des Vorlaufkörpers 4 Anwendung findet, wie später beschrieben werden wird. Der Gruppenstrahler 1 umfasst mehrere (hier 22), selektiv ansteuerbare Schallwandler 2, 3. Bei der Ultraschalluntersuchung können diese gemeinsam phasengleich, gemeinsam aber untereinander phasenverschoben, selektiv in Gruppen usw. angesteuert werden. Die Erfindung ist hinsichtlich der Vorgehensweise bei der Ultraschalluntersuchung nicht eingeschränkt, und es obliegt dem Fachmann, die jeweils geeignete Wahl der Ansteuerung zu wählen. Der von den Wandlern des Gruppenstrahlers 1 erzeugte Ultraschall durchläuft einen Vorlaufkörper 4 aus thermoplastischem Material, um in das Werkstück einzudringen, das angrenzend an die Koppelfläche 5 des keilförmigen Vorlaufkörpers 4, (dass im Folgenden auch als "Vorlaufkeil" bezeichnet), angeordnet ist. Es wird darauf hingewiesen, dass die Schallgeschwindigkeit des Vorlaufkeils 4 eine im Vergleich starke Temperaturabhängigkeit aufweist. In der Regel ist hier aber die Durchführung einer separaten Temperaturmessung am Vorlaufkörper 4 entbehrlich, da sich die Schallgeschwindigkeit $c$ im Vorlaufkörper unmittelbar als Ergebnis des erfindungsgemäßen Verfahrens ergibt. Sollte es unter bestimmten Umständen dennoch vorteilhaft sein, neben der Schallgeschwindigkeit $c$ auch den Absolutwert $T$ der Temperatur des Vorlaufkörpers zu kennen, so kann aus Tabellenwerken für den Werkstoff des Vorlaufkörpers aus der gemessenen Schallgeschwindigkeit $c$ auf die Temperatur des Vorlaufkörpers geschlossen werden.

Um die Genauigkeit der Ultraschalluntersuchung zu erhöhen, wird erfindungsgemäß ein Schritt zur Ermittlung der für die Ultraschalluntersuchung relevanten Bemaßungen des Vorlaufkeils 4 vorgeschlagen. Dieser Schritt kann vor, nach oder zwischen der zuvor beschriebenen Ultraschalluntersuchung durchgeführt und gegebenenfalls mehrfach wiederholt werden.

Bei diesem Schritt wird zur Ultraschallabstrahlung ebenfalls der Gruppenstrahler 1 verwendet. Ferner ist der Vorlaufkeil 4 dabei mit seiner Koppelfläche 5 nicht an ein Werkstück angekoppelt, d.h. er verbleibt ungekoppelt, insbesondere z. B. aber an Luft angekoppelt. Der Schritt umfasst in dieser Ausgestaltung drei Einzelschritte. In zwei Schritten wird das jeweilige Rückwandecho der jeweils von den äußersten Wandlern 2 und 3 erzeugten stark divergenten Schallbündel von diesen empfangen, also bei jeweils korrektem Auftreffen des Schalls auf die Koppelfläche 5 des Vorlaufkörpers 4 anhand der jeweiligen Rückwandechos die zugehörigen Laufzeiten $t_1$ und $t_2$ ermittelt. Diese Schritte können zeitlich verschoben, aber auch zeitgleich, durchgeführt werden. Es wird darauf hingewiesen, dass die kürzesten Schallstrecken für den Ultraschall die Strecken $d_1$ und $d_2$ sind, die den jeweiligen lotrechten Abständen der Wandler 2, 3 auf die Koppelfläche 5 entsprechen. In einem dritten Unterschritt wird die Laufzeit $t$ des Ultraschalls vom Wandler 3 als Sender zum Wandler 2 als Empfänger (oder umgekehrt) unter Ausbildung eines Rückwandechos, also bei schrägem Einfall auf die Koppelfläche 5, gemessen. Die kürzeste Schallstrecke $e_1+e_2$ des Ultraschalls zeichnet sich dadurch aus, dass der Einfallswinkel $\beta$ dem Ausfallswinkel $\beta$ an der Rückwand (Koppelfläche 5) entspricht.

Im Fall eines dickeren z.B. keilförmigen Vorlaufkörpers kann es vorteilhaft sein, wenn die vorstehend beschriebene Erfassung des Rückwandechos am ungekoppelten Vorlaufkörper nicht mittels des Schallbündels eines einzelnen wandlers des Gruppenstrahlers durchgeführt wird, sondern mehrere (benachbarte) Wandler des Gruppenstrahlers z.B. am rechten sowie am linken Rand zusammengefasst werden, um Schallbündeln mit reduzierter Divergenz zu erzeugen. Auch eine solche modifizierte Verfahrensführung soll vom erfindungsgemäßen Verfahren mit umfasst sein.

Aus den drei gemessenen Laufzeiten $t$, $t_1$, $t_2$ und des bekannten oder vorher bestimmten (unveränderlichen) Abstands der Wandler w lässt sich die Schallgeschwindigkeit c im Vorlaufkeil 4 wie folgt bestimmen:

$$(1) \qquad c = \frac{w}{\sqrt{t^2 - t_1\, t_2}} = w \left(t^2 - t_1\, t_2\right)^{-\frac{1}{2}}$$

Daraus können die Abstände $d_1$ und $d_2$ wie folgt berechnet werden:

$$(2) \qquad d_1 = \frac{c\, t_1}{2} \qquad\qquad d_2 = \frac{c\, t_2}{2}$$

Der Steigungswinkel des Vorlaufkeils kann aus der Gleichung

$$(3) \qquad \sin(\alpha) = \frac{d_2 - d_1}{w}$$

ermittelt werden. Der in der Figur nicht gezeigte mittlere Abstand d entspricht dem Abstand zwischen der Koppelfläche und dem Mittelpunkt der von den Wandlern 1 bedeckten Fläche auf der der Koppelfläche 4 gegenüberliegenden Begrenzungsfläche des Vorlaufkörpers 5 und bestimmt sich zu:

$$(4) \qquad d = \frac{d_1 + d_2}{2}$$

Zur Herleitung der Gleichung (1):

Anhand der Dreiecke $\triangle ABC$ und $\triangle BCD$ können $e_1$ und $e_2$ bestimmt werden:

$$(5) \qquad e_1 = \frac{d_1}{\sin \beta} \qquad\qquad e_2 = \frac{d_2}{\sin \beta}$$

Für die Summe von $e_1$ und $e_2$ gilt:

$$(6) \qquad e_1 + e_2 = c\, t$$

Mit den obigen Gleichungen für $e_1$ und $e_2$ entspricht dies:

$$(7) \qquad c\, t \sin \beta = d_1 + d_2$$

Bei Umformung unter Verwendung der Gleichungen (2) für $d_1$ und $d_2$ erhält man:

$$(8) \qquad \sin\beta = \frac{t_1 + t_2}{2\,t}$$

Mittels Kosinussatz des Dreiecks $\triangle$BDE erhält man:

$$(9) \qquad w^2 = e_1^2 + e_2^2 - 2e_1 e_2 \cos(180° - 2\beta)$$

Mit:

$$(10) \qquad \cos(180° - 2\beta) = 2\sin^2(\beta) - 1$$

ergibt sich unter Verwendung der Gleichungen (4) und (9):

$$(11) \qquad w^2 \sin^2(\beta) = d_1^2 + d_2^2 - 2d_1 d_2 \left(2\sin^2(\beta) - 1\right)$$

Mit den Gleichungen (2), (8) und (11) ergibt sich:

$$(12) \qquad w^2 \left(\frac{t_1 + t_2}{2t}\right)^2 = c^2 \left\{ \frac{t_1^2}{4} + \frac{t_2^2}{4} - \frac{t_1\, t_2}{2} \left( 2\left(\frac{t_1 + t_2}{2\,t}\right)^2 - 1 \right) \right\}$$

Oder entsprechend:

$$c = \frac{w}{\sqrt{t^2 - t_1\, t_2}} = w\left(t^2 - t_1\, t_2\right)^{-\frac{1}{2}}$$

Daher lässt sich bei dem gezeigten keilförmigen Vorlaufkörper 4 des Prüfkopfs, die im Vorlaufkörper 4 vorliegende Schallgeschwindigkeit c durch die Messung der Laufzeiten $t$, $t_1$, $t_2$ und aufgrund des Abstands $w$ von Sender 3 und Empfänger 2 bei schräg einfallendem Rückwandecho bestimmen. Diese so genau ermittelte und tatsächlich vorhandene Schallgeschwindigkeit c dient der Berechnung des lotrechten Abstandes $d_1$ und $d_2$ des Empfängers 2 bzw. Senders 3 zur Koppelfläche 5. Diese werden dann der Auswertung der eigentlichen Ultraschalluntersuchung zugrunde gelegt und steigert somit deren Ermittlungsgenauigkeit.

**Patentansprüche**

1. Verfahren zur zerstörungsfreien Ultraschalluntersuchung, wobei wenigstens ein Ultraschallimpuls mittels wenigstens eines Ultraschallsenders (3) in ein zu untersuchendes Werkstück abgestrahlt und der Ultraschallimpuls an Grenzflächen im Werkstück reflektiert wird, der reflektierte Ultraschall mittels wenigstens eines Ultraschallempfängers (2) empfangen wird und die zugehörigen Signale ausgewertet werden, und der Ultraschall dabei einen, zwischen dem Werkstück und dem Sender beziehungsweise Empfänger angeordneten, mit dem Ultraschallsender und Ultraschallempfänger lösbar verbundenen Vorlaufkörper (4) durchdringt, wobei das Verfahren wenigstens einen Schritt zur Ermittlung wenigstens einer für die Ultraschalluntersuchung relevanten Bemaßung *(alpha, $d_1$, $d_2$)* des Vorlaufkörpers (4) umfasst, bei dem die Laufzeit wenigstens eines Ultraschallimpulses, der von dem Ultraschallsender (3) erzeugt, an einer Begrenzungsfläche (5) des Vorlaufkörpers (4) reflektiert und von dem Ultraschallempfänger (2) empfangen wird, gemessen und daraus wenigstens eine für die Ultraschalluntersuchung relevante Bemaßung

*(alpha, $d_1$, $d_2$)* des Vorlaufkörpers (4) ermittelt wird, wobei im Schritt zur Ermittlung wenigstens einer für die Ultraschalluntersuchung relevanten Bemaßung *(alpha, $d_1$, $d_2$)* des Vorlaufkörpers (4) dieser nicht an das Werkstück gekoppelt ist und wobei ein Gruppenstrahler (1) aus selektiv ansteuerbaren, jeweils als Ultraschallempfänger oder -Sender fungierenden, Ultraschallwandlern (2, 3), verwendet wird und in dem Schritt zur Ermittlung wenigstens einer für die Ultraschalluntersuchung relevanten Bemaßung *(alpha, $d_1$, $d_2$)* des Vorlaufkörpers (4) in einem Schritt die Laufzeit eines schräg auf die an das Werkstück anzugrenzende Koppelfläche (5) auftreffenden Rückwandechos zwischen zwei Ultraschallwandlern (2, 3) des Gruppenstrahlers und in zwei weiteren Schritten jeweils die Laufzeit eines senkrecht auf die Koppelfläche (5) auftreffenden Rückwandechos gemessen werden, wobei jeweils einer der zwei Ultraschallwandler (2, 3) sowohl als Sender als auch als Empfänger fungiert und im Schritt zur Ermittlung wenigstens einer für die Ultraschalluntersuchung relevanten Bemaßung *(alpha, $d_1$, $d_2$)* des Vorlaufkörpers (4) die Ermittlung anhand einer Triggerung auf eine Impulsspitze des empfangenen Impulsechos erfolgt und wobei die ermittelte Bemaßung *(alpha, $d_1$, $d_2$)* des Vorlaufkörpers (4) bei der Auswertung der Signale bei der Ultraschalluntersuchung des Werkstücks berücksichtigt wird.

2. Verfahren gemäß dem vorhergehenden Anspruch, **dadurch gekennzeichnet, dass** die Bemaßung *(alpha, $d_1$, $d_2$)* mittels einer der jeweiligen Laufzeit entsprechenden, kürzesten, geometrisch oder durch numerische Simulation gewonnenen Schallstrecke *($d_1$, $d_2$, e1, e2)* berechnet wird.

3. Verfahren gemäß einem der vorhergehenden Ansprüche, **dadurch gekennzeichnet, dass** bei der Ausführung des Verfahrens die Schallgeschwindigkeit c im Vorlaufkörper ermittelt wird.

4. Verfahren gemäß einem der vorhergehenden Ansprüche **dadurch gekennzeichnet, dass** der Gruppenstrahler (1) mehr als zwei selektiv ansteuerbare Ultraschallwandler (2, 3) umfasst.

5. Verfahren gemäß einem der vorhergehenden Ansprüche, **dadurch gekennzeichnet, dass** der verwendete Vorlaufkörper (4) keilförmig ist oder zwei planparallele Flächen aufweist.

6. Verfahren gemäß einem der vorhergehenden Ansprüche, **dadurch gekennzeichnet, dass** der verwendete Vorlaufkörper (4) aus einem thermoplastischen Kunststoffmaterial, bevorzugt aus einem vernetzten Polystyrol-Copolymer, besteht.

**Claims**

1. Method for non-destructive ultrasound inspection, wherein at least one ultrasonic pulse is radiated into a workpiece to be inspected by means of at least one ultrasonic transmitter (3) and the ultrasonic pulse is reflected on boundary surfaces in the workpiece, the reflected ultrasound is received by means of at least one ultrasonic receiver (2) and the associated signals are evaluated, and the ultrasound in the process passes through a leading body (4) which is disposed between the workpiece and the transmitter or receiver and is detachably connected to the ultrasonic transmitter and the ultrasonic receiver, wherein the method comprises at least one step for determining at least one dimension *(alpha, $d_1$, $d_2$)* of the leading body (4) that is relevant for the ultrasound inspection, in which the travel time of at least one ultrasonic pulse which is generated by the ultrasonic transmitter (3), reflected on a boundary surface (5) of the leading body (4) and received by the ultrasonic receiver (2), is measured, and at least one dimension *(alpha, $d_1$, $d_2$)* of the leading body (4) that is relevant for the ultrasound inspection is determined therefrom, wherein, in the step for the determination of at least one dimension *(alpha, $d_1$, $d_2$)* of the leading body (4) that is relevant for the ultrasound inspection, the leading body is not coupled to the workpiece, and wherein a phased array (1) of selectively controllable ultrasonic transducers (2, 3) acting as ultrasonic receiver or transmitter is used and in the step for the determination of at least one dimension *(alpha, $d_1$, $d_2$)* of the leading body (4) that is relevant for the ultrasound inspection, in one step the travel time of a back-face echo obliquely incident on the coupling surface (5) to be adjoined to the workpiece between two ultrasonic transducers (2, 3) of the phased array is measured, and in two additional steps the travel time of a back-face echo perpendicularly incident on the coupling surface (5) is measured, wherein one of the two ultrasonic transducers (2, 3) acts as transmitter as well as receiver and in the step for the determination of at least one dimension *(alpha, $d_1$, $d_2$)* of the leading body (4) that is relevant for the ultrasound inspection the determination is carried out by means of triggering to a pulse peak of the received pulse echo and wherein the determined dimension *(alpha, $d_1$, $d_2$)* of the leading body (4) is taken into account in the evaluation of the signals in the ultrasound inspection of the workpiece.

2. Method according to the preceding claim, **characterised in that** the dimension *(alpha, $d_1$, $d_2$)* is calculated by means of a sound path ($d_1$, $d_2$, e1, e2) that corresponds to the respective travel time, is the shortest, is obtained by geometric means or numerical simulation.

3. Method according to any of the preceding claims, **characterised in that** the sound velocity c in the leading body is determined when the method is carried out.

4. Method according to any of the preceding claims, **characterised in that** the phased array (1) comprises more than two selectively controllable ultrasonic transducers (2, 3).

5. Method according to any of the preceding claims, **characterised in that** the leading body (4) used has a wedge shape or two plane-parallel surfaces.

6. Method according to any of the preceding claims, **characterised in that** the leading body (4) used consists of a thermoplastic synthetic material, in particular a crosslinked polystyrene copolymer.

## Revendications

1. Procédé d'examen non destructeur aux ultrasons, dans lequel au moins une impulsion ultrasonore est émise au moyen d'au moins un émetteur d'ultrasons (3) dans une pièce à examiner et l'impulsion ultrasonore est réfléchie sur des surfaces limites de la pièce, l'ultrason réfléchi est reçu au moyen d'au moins un récepteur d'ultrasons (2) et les signaux connexes sont évalués, et l'ultrason pénètre en l'occurrence dans un corps intermédiaire (4) agencé entre la pièce et l'émetteur, éventuellement le récepteur, et relié de manière amovible à l'émetteur d'ultrasons et au récepteur d'ultrasons, dans lequel le procédé comprend au moins un stade pour détecter au moins une dimension importante pour l'examen ultrasonore (alpha, $d_1$, $d_2$) du corps intermédiaire (4), dans lequel le temps de propagation d'au moins une impulsion ultrasonore, qui est produite par l'émetteur d'ultrasons (3), se réfléchit sur une surface de limitation (5) du corps intermédiaire (4) et est reçue par le récepteur d'ultrasons (2), est mesuré et l'on en tire au moins une dimension (alpha, $d_1$, $d_2$) du corps intermédiaire (4) importante pour l'examen ultrasonore, dans lequel, dans le stade de détermination d'au moins une dimension (alpha, $d_1$, $d_2$) du corps intermédiaire (4) importante pour l'examen ultrasonore, celui-ci n'est pas couplé à la pièce et dans lequel on utilise un groupement d'antennes (1) constitué de transducteurs d'ultrasons (2, 3) qui peuvent être commandés sélectivement et opèrent respectivement comme récepteurs ou émetteurs d'ultrasons et, dans le stade de détermination d'au moins une dimension (alpha, $d_1$, $d_2$) du corps intermédiaire (4) importante pour l'examen ultrasonore, on mesure dans un stade le temps de propagation d'un écho de la paroi arrière tombant en oblique sur la surface de couplage (5) contiguë à la pièce entre deux transducteurs d'ultrasons (2, 3) du groupement d'antennes et, dans deux autres stades, on mesure respectivement le temps de propagation d'un écho de paroi arrière tombant perpendiculairement sur la surface de couplage (5), dans lequel, respectivement, l'un des deux transducteurs d'ultrasons (2, 3) opère autant comme émetteur que comme récepteur et, dans le stade de détermination d'au moins une dimension (alpha, $d_1$, $d_2$) du corps intermédiaire (4) importante pour l'examen ultrasonore, la détermination se fait au moyen d'un déclenchement sur une pointe d'impulsion de l'écho d'impulsion reçu et dans lequel la notation déterminée (alpha, $d_1$, $d_2$) du corps intermédiaire (4) est prise en compte dans l'évaluation des signaux lors de l'examen ultrasonore de la pièce.

2. Procédé selon la revendication précédente, **caractérisé en ce que** la dimension (alpha, $d_1$, $d_2$) est calculée au moyen d'une bande sonore ($d_1$, $d_2$, e1, e2) correspondant au temps de propagation respectif, la plus courte obtenue par voie géométrique ou par simulation numérique.

3. Procédé selon l'une quelconque des revendications précédentes, **caractérisé en ce que** la vitesse du son c est déterminée dans le corps intermédiaire lors de la réalisation du procédé.

4. Procédé selon l'une quelconque des revendications précédentes, **caractérisé en ce que** le groupement d'antennes (1) comprend plus de deux transducteurs d'ultrasons (2, 3) qui peuvent être commandés sélectivement.

5. Procédé selon l'une quelconque des revendications précédentes, **caractérisé en ce que** le corps intermédiaire utilisé (4) est en forme de cale ou présente deux surfaces plan-parallèles.

6. Procédé selon l'une quelconque des revendications précédentes, **caractérisé en ce que** le corps intermédiaire utilisé (4) est constitué d'une matière plastique thermoplastique, de préférence d'un copolymère de polystyrène réticulé.

## Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007144271 A
- DE 3327526 A1
- DE 3441894 A1
- DE 102008037173
- DE 102008002445
- DE 102008002450

**In der Beschreibung aufgeführte Nicht-Patentliteratur**

- **J. ; H. KRAUTKRÄMER.** Werkstoffprüfung mit Ultraschall. Springer, 1986